# EUROPEAN PATENT APPLICATION

(11) **EP 1 201 512 A1**
(43) Date of publication of application: **02.05.2002**
(21) Application number: 00944396.1
(22) Date of filing: 11.07.2000
(51) Int. Cl.: B60R 22/26

(54) **GAS GENERATOR**

(30) Priority: 12.07.1999 JP 19751699
(71) Applicant: Nippon Kayaku Kabushiki Kaisha, Tokyo 102-8172 (JP)
(72) Inventor: Tanaka, Koji Himeji Fac. of Nippon Kayaku K.K., Himeji-shi Hyogo 679-2123 (JP); Saso, Takashi Himeji Fac. of Nippon Kayaku K.K., Himeji-shi Hyogo 679-2123 (JP)
(74) Representative: Briat, Sophie
(86) International application number: JP0004624
(87) International publication number: WO0103979

(57) **Abstract**

The present invention aims to provide a gas generator that can provide an improved reliability in control of an expansion and inflation of an airbag.

The gas generator D of the present invention is so structured that gas generating agents 7 packed in combustion chambers 3, 4 can be burnt by the ignitors 8, 9 independently of each other, wherein the ignitors 8, 9 are fitted to a housing 1 via connecting configuration (pattern E) to connect the ignitors 8, 9 to connectors 33, 34 different from each other.

## Description

### Technical Field

The present invention relates to a gas generator that can provide a controlled expansion and inflation of an airbag system. More particularly, the present invention relates to a gas generator that can provide a controlled expansion and inflation of the airbag by burning gas generating agents in the housing by use of a plurality of ignitors.

### Background Art

A gas generator that works to expand and inflate the airbag rapidly to protect a vehicle occupant from the shock at a car collision is built in an airbag module fitted in a steering wheel or an instrument panel. The gas generator generates a large amount of gas rapidly by burning the gas generating agents by flames of the ignitors (squibs) ignited by the application of power from control circuits.

The conventional gas generator has the mode of expanding and inflating the airbag rapidly at any time that the car collision happens, irrespective of a seating position of a vehicle occupant (a normal seat position or an abnormal seat position such as a stoop-shouldered position, etc.). Thus, the conventional gas generator has the problem of being unable to expand and inflate the airbag in accordance with the seating position of the occupant, such as, for example, the abnormal seat position of the occupant immediately behind the steering wheel or instrument panel.

For solving this problem, there has been proposed and developed the technique of adapting the conventional gas generator to be applied to the passenger-side airbag. The proposed gas generator is so designed that an elongate cylindrical housing is partitioned into a plurality of combustion chambers and also the gas generating agents in the respective combustion chambers are burnt independently of each other by the respective ignitors (squibs). The ignitors are operated (ignited by the application of power thereto) in such a time difference that, in the initial stage of inflation, the airbag is expanded and inflated gently or moderately by a small amount of gas generated from a first combustion chamber and, then, is expanded and inflated rapidly by a large amount of gas generated in the respective combustion chambers. This can provide a controlled expansion and inflation of the airbag, and as such can allow the airbag to be expanded and inflated in accordance with the seating position of the occupant.

However, in the conventional gas generator in which the gas generating agents are burnt by the plurality of ignitors, the ill-set of the connectors is likely to happen when connecting between the ignitors (squibs) and the control circuits (control units) for controlling the application of power to the ignitors.

The ill-set of the connectors causes the reversed operation of the ignitors (ignition by the application of power) and provides an inadequately controlled expansion and inflation of the airbag and thus reduced reliability.

It is the object of the present invention to provide a gas generator that can provide a controlled expansion and inflation of the airbag with improved reliability.

### Disclosure of the Invention

A gas generator of the present invention is so structured that gas generating agents in the housing are burnt by a plurality of ignitors and that the ignitors are fitted to the housing via connecting configuration (pattern) to connect the ignitors with connectors different from each other.

This enables the connectors to be connected to the ignitors with discrimination of the pattern for the ignitors, so the ill-set of the connectors to the ignitors can be prevented. Also, an amount of gas generated can be adjusted by adequately selecting the operation of the ignitors, whereby a controlled expansion and inflation of the airbag can be provided.

Also, a gas generator of the present invention is so structured that gas generating agents in a plurality of combustion chambers are burnt by a plurality of ignitors independently of each other, that the ignitors are electrically ignited by the passage of electric current through two electrodes, and that the ignitors are fitted to the housing via connecting configuration (pattern) to connect the ignitors with connectors different from each other.

This enables the connectors to be connected to the ignitors with discrimination of the pattern for the ignitors and, accordingly, the ill-set of the connectors to the ignitors can be prevented. This can provide an adequately controlled expansion and inflation of the airbag, without reversing the operation order of the ignitors and the combustion order in the combustion chambers, and also can provide an improved reliability in the control. In addition, the expansion and inflation of the airbag can be controlled by operating the ignitors with a very small time lag. Specifically, the airbag can be expanded and inflated in the following operation modes. For example, in a first operation mode, the airbag is expanded and inflated gently or moderately in the initial stage of inflation thereof and then is expanded and inflated rapidly. In a second operation mode, the ignitors are operated simultaneously to expand and inflate the airbag rapidly. In a third operation mode, only one ignitor is operated to expand and inflate the airbag gently. This can provide a controlled expansion and inflation of the airbag in accordance with the seating position of the occupant.

At least one of the following patterns may be selectively used as the connecting configuration (pattern) for the ignitors of the present invention: (1) the pattern that the ignitors are fitted to the housing in such a relation that when virtual lines connecting between electrodes are assumed in the ignitors, respectively, those virtual lines are intersected each other; (2) the pattern that the ignitors are differentiated from each other in shape of electrode, via which the ignitors are fitted to the housing; (3) the pattern that the ignitors are differentiated from each other in distance between electrodes, via which the ignitors are fitted to the housing; and (4) the pattern that the ignitors are differentiated from each other in at least either of shape and color, via which the ignitors are fitted to the housing.

In addition, a gas generator of the present invention is so structured that the gas generating agents in the housing are burnt by a plurality of ignitors, that the ignitors are connected to their associated connectors, and that the connectors are fitted to the housing via fitting configuration (pattern) to fit the connectors different from each other to the housing.

This enables the connectors to be connected to the ignitors with discrimination of the pattern for the connectors. Hence, the ill-set of the connectors to the ignitors can be prevented. Also, an amount of gas generated can be adjusted by adequately selecting the operation of the ignitors, whereby a controlled expansion and inflation of the airbag can be provided. Further, in addition to the pattern for the connectors, the pattern for the ignitors can be discriminated via connecting configuration (pattern) to connect the ignitors to the connectors different from each other via which the ignitors are fitted to the housing. This can provide the result that the ill-set of the connectors to the ignitors can be reliably prevented.

Also, the pattern that the connectors are differentiated from each other in at least either of shape and color, via which the connectors are fitted to the housing may be used as the fitting configuration (pattern) for the connectors of the present invention. The connectors may be formed as an integral unit to reduce parts count.

A gas generator of the present invention is so structured that the gas generating agents in the housing are burnt by a plurality of ignitors, that the ignitors are connected to their associated connectors located outside of the housing, and that the connectors are connected with control-circuit-side connectors via connecting configuration (pattern) to connect the connectors with the control-circuit-side connectors different from each other.

This enables the connection between the ignitors and the control circuits via a plurality of connectors to be done with discrimination of the pattern for the connectors. Hence, the ill-set of the connectors can be prevented. Also, an amount of gas generated can be adjusted by adequately selecting the operation of the ignitors, whereby a controlled expansion and inflation of the airbag can be provided. Further, any one of the connectors and the control-circuit-side connectors may be formed as an integral unit to reduce parts count.

### Brief Description of the Drawings

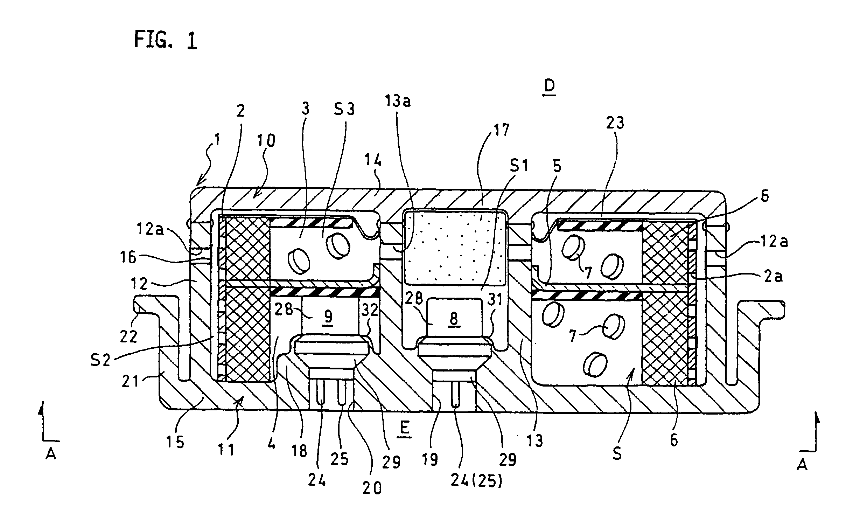

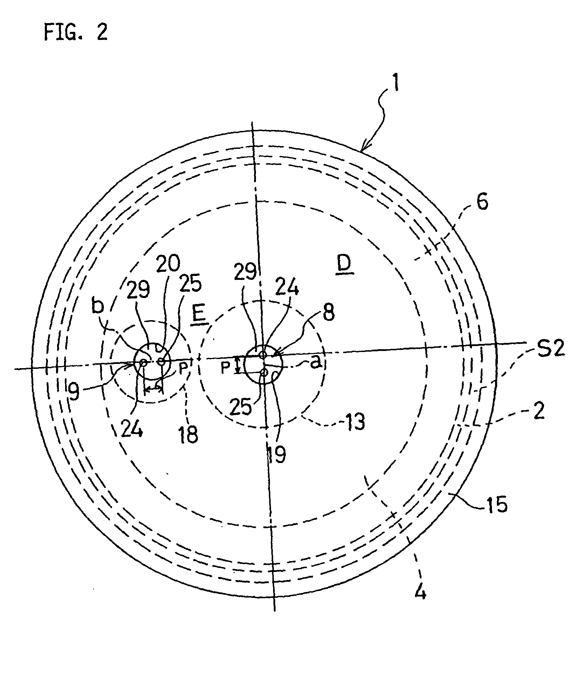

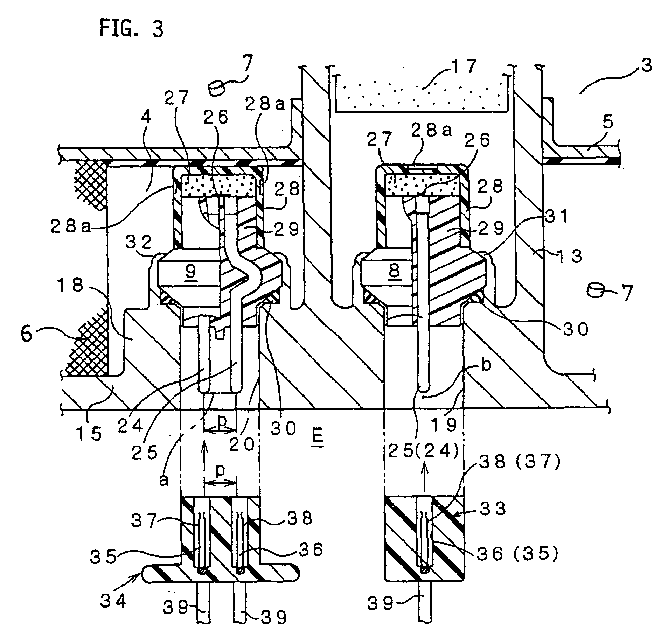

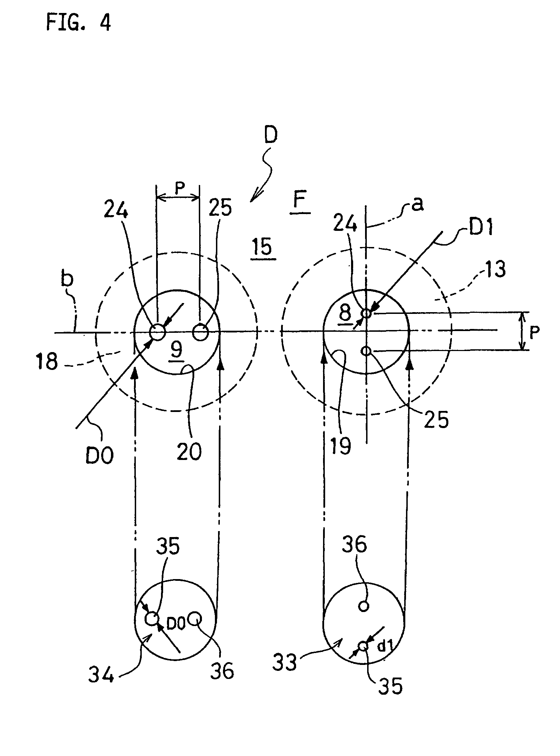

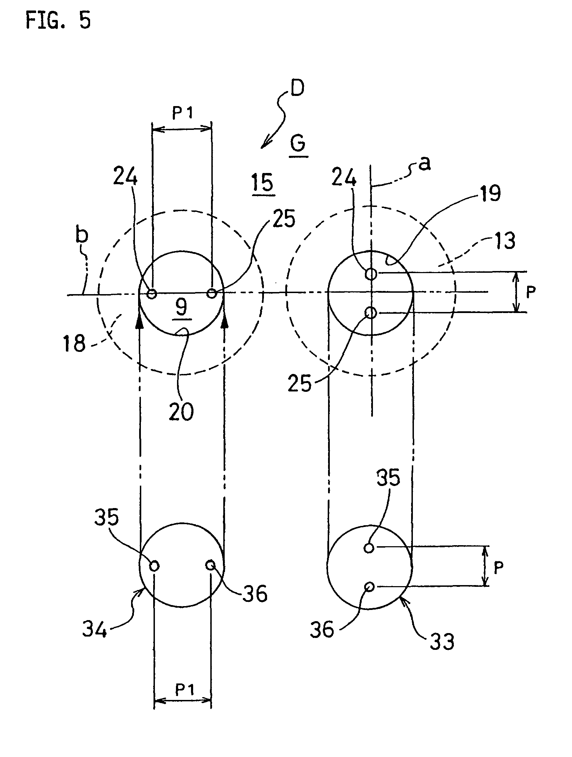

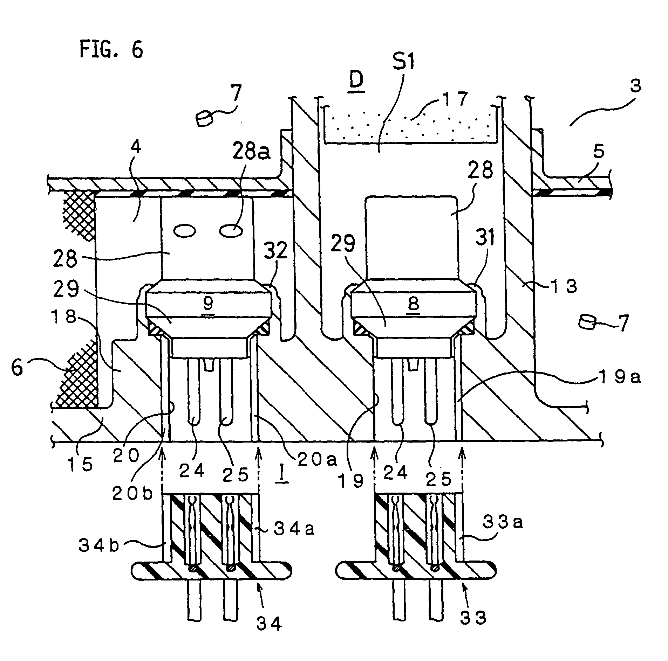

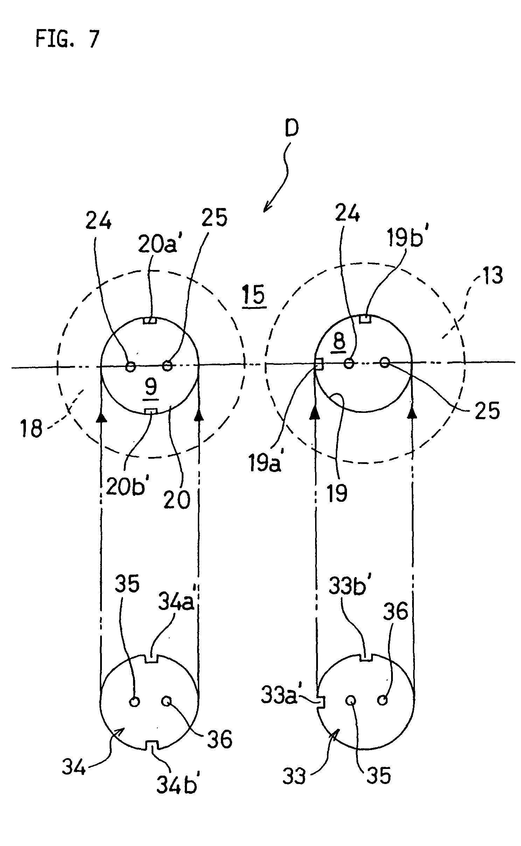

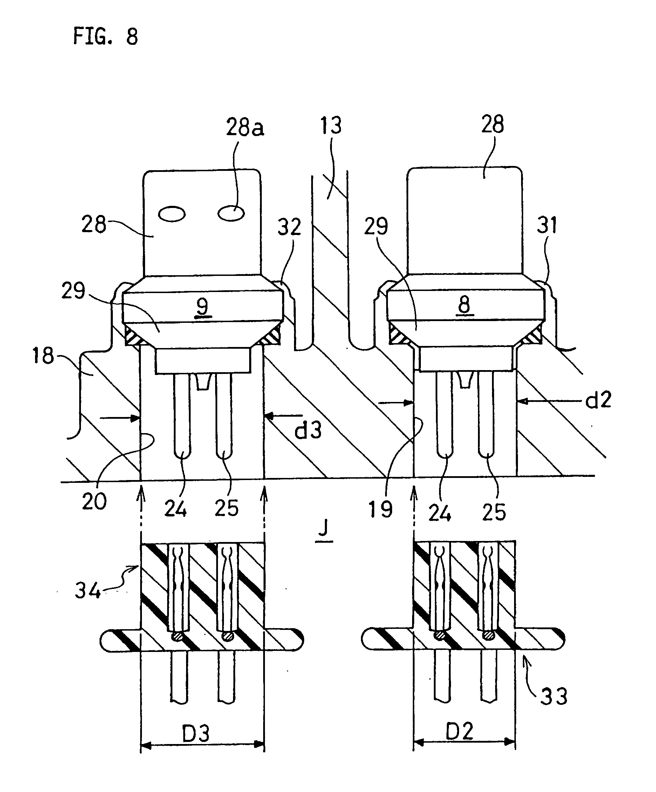

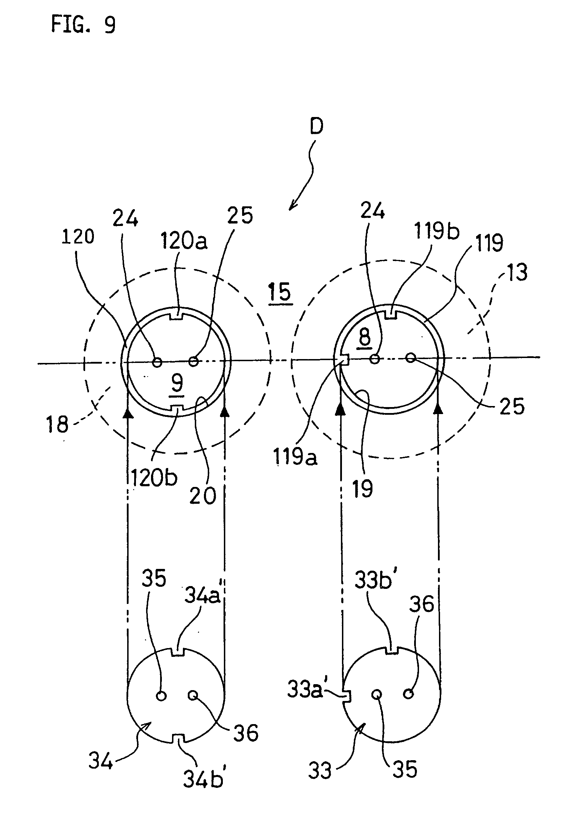

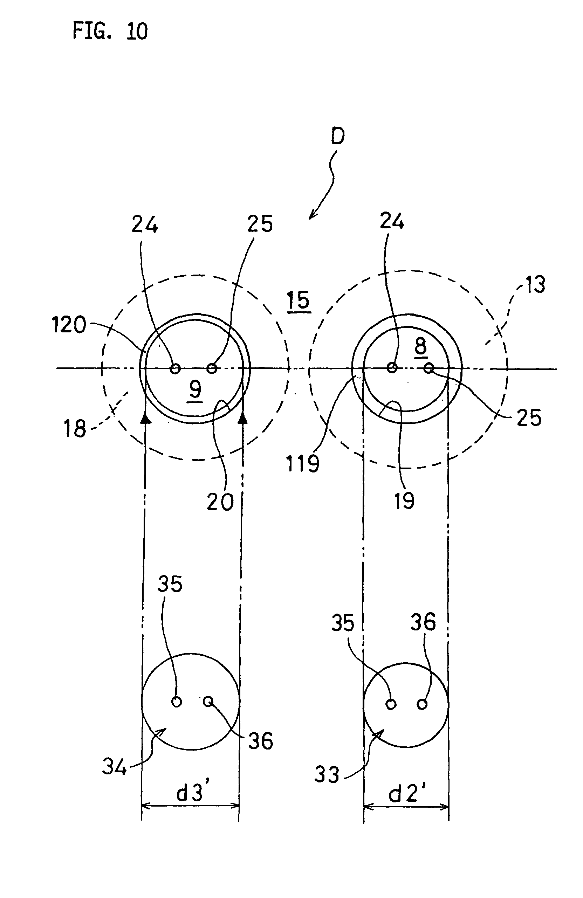

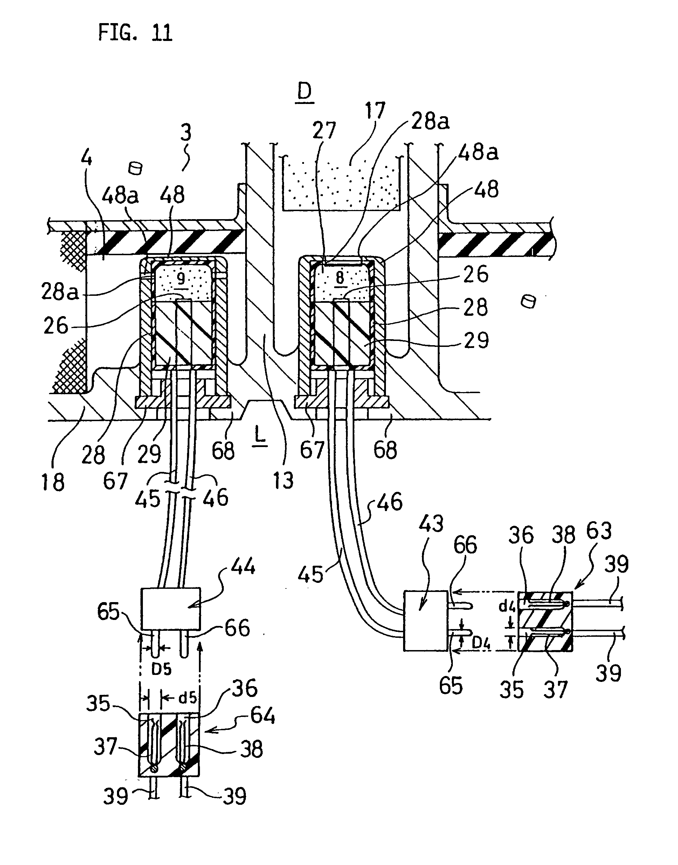

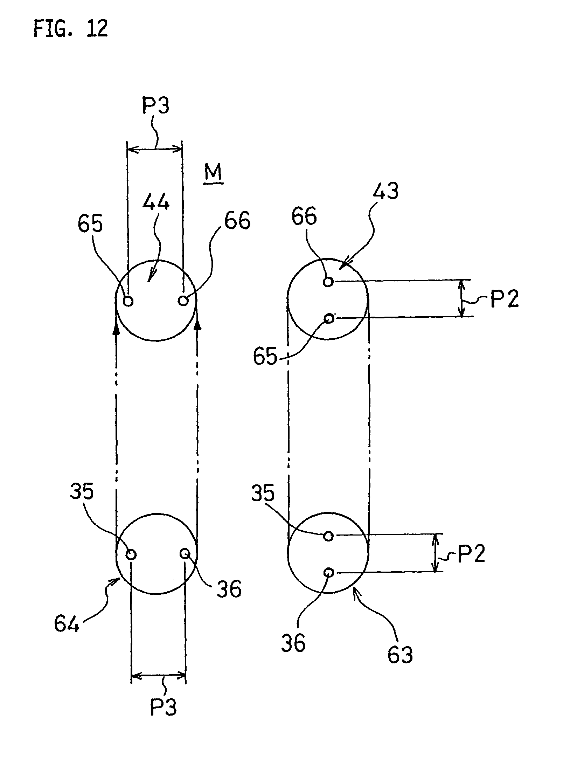

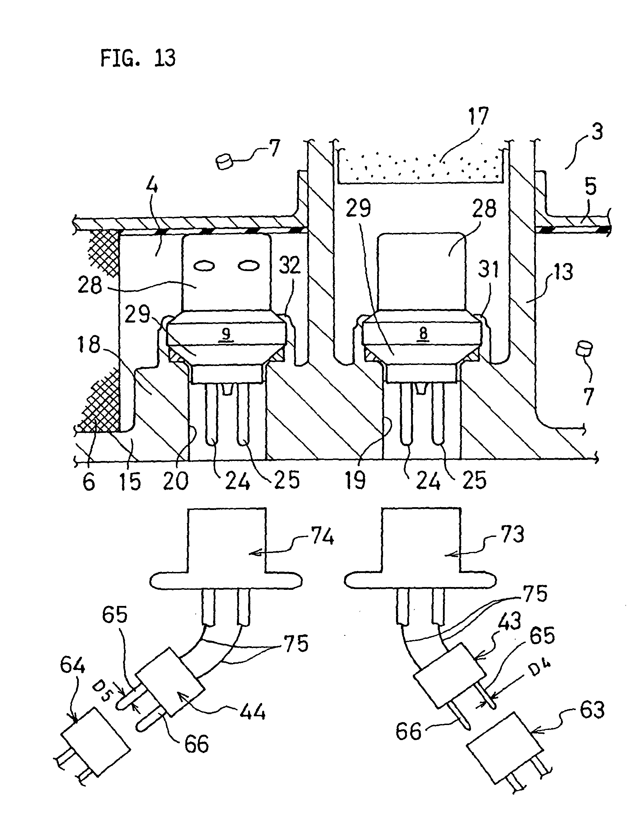

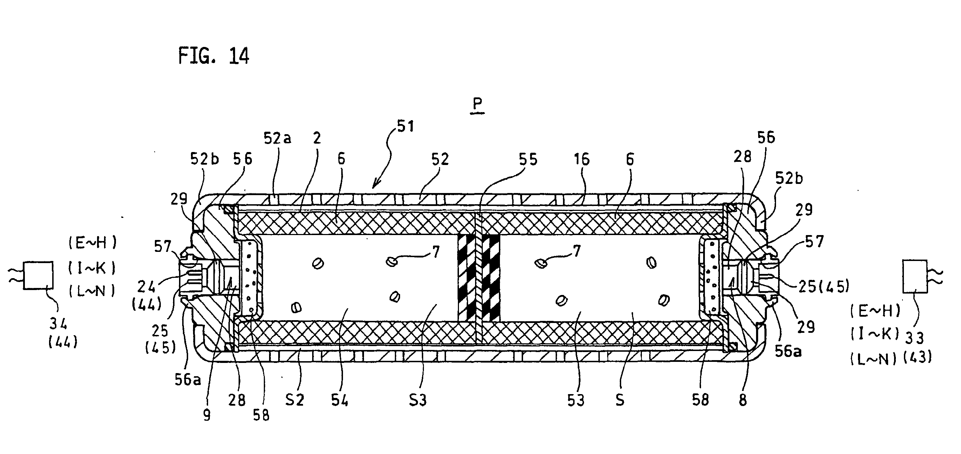

FIG. 1 is a sectional view of a gas generator that works to expand and inflate a driver-side airbag. FIG. 2 is a diagram taken along arrowed line A-A of FIG. 1. FIG. 3 is an enlarged view of a principal part of the configuration of the ignitors of FIG. 1. FIG. 4 is an enlarged view of the connecting configuration (pattern) of the ignitors (pin type squibs). FIG. 5 is an enlarged view of the connecting configuration (pattern) of the ignitors (pin type squibs). FIG. 6 is an enlarged view of a fitting configuration (pattern) of the connectors. FIG. 7 is an enlarged view of the connecting configuration (pattern) of the ignitors (pin type squibs). FIG. 8 is an enlarged view of the fitting configuration (pattern) of the connectors. FIG. 9 is an enlarged view of the connecting configuration (pattern) of the ignitors (pin type squibs). FIG. 10 is an enlarged view of the connecting configuration (pattern) of the ignitors (pin type squibs). FIG. 11 is an enlarged view of the connecting configuration (pattern) of the connectors of the ignitors (pigtail type squibs). FIG. 12 is an enlarged view of the connecting configuration (pattern) of the connectors of the ignitors (pigtail type squibs). FIG. 13 is an enlarged view of a valiant of the ignitors (pigtail type squibs). FIG. 14 is a sectional view of the gas generator that works to expand and inflate the passenger-side airbag.

### Best Mode for Carrying out the Invention

Description will be given on the embodied forms of a gas generator of the present invention.

The gas generator of the present invention is designed to provide a controlled expansion and inflation of an airbag by burning gas generating agents packed in the housing by use of a plurality of ignitors.

Also, the gas generator of the present invention is designed to provide a reliable connection between the ignitors and their respective connectors or between the respective connectors, to thereby provide improved reliability of the expansion and inflation of the airbag. For example, the ignitors are fitted to the housing via a connecting configuration (pattern) to connect the ignitors to the connectors different from each other. Also, the connectors are fitted to the housing via a different fitting configuration (pattern) to fit the connectors different from each other to the housing. Additionally, the connectors are connected to the control-circuit-side connectors, respectively, via a connecting configuration (pattern) to connect the connectors to the control-circuit-side connectors different from each other.

In the following, the embodied forms of the gas generator of the present invention will be described with reference to FIGS. 1 through 14.

The gas generators described herein include the one used to expand and inflate the driver-side airbag (FIG. 1) and the one used to expand and inflate the passenger-side airbag (FIG. 14).

The gas generator D shown in FIGS. 1 and 2 is so designed that the ignitors 8, 9 are fitted to the housing 1 via a connecting configuration (pattern E) to connect the ignitors to the connectors 33, 34 different from each other. The gas generator D is used to expand and inflate the driver-side airbag. The gas generator comprises a short cylindrical housing 1, a partition member 5 for partitioning an inner space of the housing 1 into two upper and lower combustion chambers 3, 4, filters 6 fitted in the combustion chambers 3, 4, gas generating agents 7 packed in the combustion chambers, and two ignitors (squibs) 8, 9 for burning the gas generating agents 7 packed in the combustion chambers 3, 4 independently of each other.

The housing 1 has a double cylinder structure formed by an upper casing 10 and a lower casing 11. The housing 1 is so structured that the upper casing 10 and the lower casing 11 are joined to each other by butt welding (e.g. friction welding) so that an outer cylinder 12 and an inner cylinder 13 can be closed at the upper and lower ends thereof by two cover plates 14, 15. Thus, the interior of the housing 1 is partitioned into a closed annular space S closed by the outer cylinder 12 and the inner cylinder 13 and a space S1 on the inward side of the inner cylinder 13.

The outer cylinder 12 of the housing 1 has a plurality of gas discharge holes 12a formed to communicate between the closed space S and outside (interior of the airbag). The gas discharge holes 12a open in the outer cylinder 12 at an upper end portion thereof (on the upper cover plate 14 side) and are spaced apart at a given interval along a circumferential direction of the housing 1. The gas discharge holes 12a are closed by a burst plate 16 adhered to an inside surface around the outer cylinder 12. The bust plate 16 is formed of a metal foil such as aluminum and serves as moisture-proof and inner pressure adjustment of the housing 1.

The inner cylinder 13 has a plurality of flame spouting holes 13a communicating between the spaces S and S1. The flame spouting holes 13a open in the inner cylinder 13 at an upper end portion thereof (on the upper cover plate 14 side) and are spaced apart at a given interval along the circumferential direction of the housing 1.

The lower cover plate 15 of the housing 1 has a short cylinder 18 which is integrally molded to project into the closed space S. The short cylinder 18 is located at a position between the outer cylinder 12 and the inner cylinder 13, deviating from the axis of the housing 1 (inner cylinder 13) toward the outer cylinder 12.

The lower cover plate 15 has stepped holes 19, 20 formed to communicate between the interiors of the inner cylinders 13, 18 and the outside. Further, the lower cover plate 15 has a flanged cylinder 21 formed around its peripheral margin to extend toward the upper cover plate 14 along an outside diameter of the outer cylinder 12. A retainer or equivalent (not shown) of the airbag module (including the airbag and a bag cover) is attached to a flange 22 of the flanged cylinder 21.

Fitted in the closed space S in the housing 1 is a cylindrical filter supporting member 2.

The filter supporting member 2 is produced by molding a metal, such as a perforated metal sheet (punching metal) or an expanded metal, into a cylindrical form. The filter supporting member 2 is fitted in a space between the outer cylinder 12 and the short inner cylinder 18 and extends from the lower cover plate 15 to a position close to the upper cover plate 14. The filter supporting member 2 is closed at its upper end by a cover plate ring 23 fitted to the periphery of the inner cylinder 13. Thus, the filter supporting member 2 is partitioned into a gas passage space S2 (annular space) on the outer cylinder 12 side and a combustion space S3 (annular space) on the inner cylinder 13 side. Also, the filter supporting member 2 has a plurality of gas passage holes 2a communicating between the respective spaces S2 and S3, which are formed by the punching metal or equivalent.

The combustion space S3 in the filter supporting member 2 is partitioned into two upper and lower combustion chambers 3, 4 by the partition member 5. The partition member 5 is press-fitted in the filter supporting member 2 in substantially parallel thereto, so that the combustion chamber S3 is partitioned into the combustion chambers 3, 4 in a predetermined volume proportion. The partition member 5 is fitted to the periphery of the inner cylinder 13, so that it is positioned above the short inner cylinder 18.

The filters 6 are fitted in the combustion chambers 3, 4, respectively, and also the gas generating agents 7 are packed in the combustion chambers. The filters 6 are produced at a low price, for example, by pressing a wire fabric of stocking stitch or an aggregation of crimped metal wire rods into cylindrical shape. The filters 6 are fitted in the space between the filter supporting member 2 and the short inner cylinder 18, one of which extends from the partition member 5 to the cover plate ring 23 within the combustion chamber 3, and the other of which extends from the lower cover plate 15 to the partition member 5 within the combustion chamber 4. The combustion chambers 3, 4 are packed with gas generating agents 7 from which high temperature gas is generated by burning. The gas generating agents packed in the combustion chambers are adjusted in amount so that a controlled expansion and inflation of the airbag can be provided.

The ignitors 8, 9 are fitted to the inner cylinder 13 and the short inner cylinder 18 of the housing 1, respectively.

In FIG. 3, the ignitors 8, 9 are presented in the form of pin-type squibs that make ignition agents 27 to be ignited by the passage of electric current through two electrode pins 24, 25 (electrodes).

Each ignitor 8, 9 comprises a cup-shaped tubular member 28, the ignition agent 27 contained in the tubular member 28, a bridge wire 26 that generates heat by the application of power to the electrode pins 24, 25, and a rod-like plug 29. The bridge wire 26 and the ignition agent 27 are shielded in the tubular member 28 in the press-contacted condition by the plug 29 fittingly inserted in the tubular member 28. The electrode pins 24, 25 extend through the plug 29 from the inside of the tubular member 28 and project out to the opposite side of the tubular member 28. The bridge wire 26 is connected to the electrode pins 24, 25 in the interior of the tubular member 28, so as to be bridged therebetween.

The ignitors 8, 9 are fitted into the inner cylinders 13, 18 from the projecting side of the electrode pins 24, 25, respectively, so that the tubular members 28 are projected into the inner cylinder 13 or the combustion chamber 4. Then, the ignitors 8, 9 are brought into elastic contact with sealing members 30 seated on the steps of the stepped holes 19, 20 and the electrode pins 24, 25 are projected out to the opening sides of the stepped holes 19, 20.

The fitting of the ignitors 8, 9 to the housing 1 is performed in such a manner as shown in FIG. 2. Specifically, the ignitors 8, 9 are fitted in the housing 1 (the inner cylinders 13, 18) in such a relation that when virtual lines a, b connecting the electrode pins 24, 25 are assumed in the ignitors 8, 9, respectively, those virtual lines a, b are intersected each other.

Then, the ignitors 8, 9 are fixedly caulked to the inner cylinders 13, 18, respectively, by the caulking projections 31, 32 projecting into the inner cylinder 13 and the combustion chamber 4 being folded radially inwardly.

With this, the ignitors 8, 9 form the different pattern E intersecting the lines a, b each other. When the connectors 33, 34 are connected to the ignitors 8, 9, respectively, the difference in alignment direction of the electrode pins 24, 25 of the ignitors 8, 9 can serve to permit the connectors 33, 34 to be surely connected to their associated ignitors 8, 9.

The ignitors 8, 9 get the bridge wire 26 to generate heat by the passage of electric current to the electrode pins 24, 25, and the generation of heat causes the ignition agents 27 to be ignited. The flames of the ignition agents 27 burst brittle portions 28a of the tubular members 28 and are spurted into the inner cylinder 13 and the combustion chamber 4, respectively (See FIG. 3).

The gas generator D thus constructed is connected to the control circuits (not shown) and is built in the airbag module fitted in the steering wheel. The connection between the gas generator D and the control circuits is performed by connecting the connectors 33, 34 to the ignitors 8, 9, respectively. The control circuits forming the control units (not shown) serve to apply electric current to the ignitors 8, 9 at the car collision. The connectors 33, 34 may be formed as an integral unit to be fitted in the stepped holes 19, 20 so that parts count of the gas generator D and the like may be reduced.

In FIG. 3, the connectors 33, 34, which are fitted into their respective stepped holes 19, 20 from the outside of the housing 1, are formed of resin and the like having the excellent electrical insulation performance. The connectors 33, 34 have two terminal holes 35, 36 which are formed with the same space as that of the electrode pins 24, 25 being left therebetween and in which the terminals 37, 38 are disposed. The terminals 37, 38 are electrically connected to lead wires 39, through which the terminals are connected to the control circuits.

The connection of the connectors 33, 34 to the ignitors are performed by fitting the connectors 33, 34 in their respective stepped holes 19, 20 so that the electrode pins 24, 25 of the ignitors 8, 9 can be fitted into the terminals 37, 38, respectively.

Then, the difference in alignment direction of the electrode pins 24, 25 of the ignitors can permit the connectors 33, 34 to be surely connected to their associated ignitors 8, 9, and thus can prevent the ill-set of the connectors.

The gas generator D connected to the control circuits operates as follows. When an automobile collision is detected by the collision sensor (not shown), only the ignitor 8 is operated (ignited by the application of power thereto) by the control circuits, to ignite the igniting agents 17 in the inner cylinder 13. The ignition flame of the igniting agents 17 is spurted into the combustion chamber 3 (the upper combustion chamber) from the flame spouting holes 13a to get the gas generating agents 7 to be burnt to thereby produce high temperature gas.

The high temperature gas generated in the combustion chamber 3 flows in the filter 6, first, for slag collection and cooling of the gas thereat, and then flows from the gas passage holes 2a into the gas passage space S2. Then, when the combustion in the combustion chamber 3 proceeds and the pressure in the housing 1 reaches a predetermined pressure, the burst plate 16 is broken, so that clean gas uniformed in the gas passage space S2 is discharged from the gas discharge holes 12a into the airbag (See FIGS. 1 and 3).

This can allow the airbag to start being expanded and inflated modestly by a small amount of gas generated in the combustion chamber 3 only.

Sequentially, when the ignitor 9 is operated (ignited by the application of power thereto) with small time difference from after the start of combustion in the combustion chamber 3, the ignition flame is spurted into the combustion chamber 4 (the lower combustion chamber) to get the gas generating agents 7 to be burnt to thereby produce high temperature gas.

The high temperature gas produced in the combustion chamber 4 flows into the filter 6, first, for the slag collection and cooling of the gas thereat, and then flows into the gas passage space S2. Then, the gas that flowed into the gas passage space S2 is discharged from the gas discharging holes 12a into the airbag. Thus, the airbag is switched to be expanded and inflated rapidly by a large amount of clean gas discharged from the respective combustion chambers 3, 4 (See FIG. 1).

As a result of this, in the initial stage of inflation, the airbag starts to be expanded and inflated moderately by a small amount of gas generated in the combustion chamber 3 only, first, and then is expanded and inflated rapidly with a short delay by a large amount of gas generated in the combustion chambers 3, 4.

The ignitors 8, 9 are not necessarily operated with the small time difference, but may be selectively operated to meet the patterns of automobile collision.

For example, in the case of a critical collision of automobile, such as a frontal clash or a head-on clash, at high speed, the ignitors 8, 9 are operated (ignited by the application of power thereto) concurrently so that the airbag can be expanded and inflated rapidly by a large amount of gases generated in the combustion chambers 3, 4.

In the case of a medium collision, the ignitors 8, 9 are operated (ignited by the application of power thereto) with a small time difference so that the airbag can be expanded and inflated moderately by a small amount of gas in the initial stage, first, and then is expanded and inflated rapidly with a short time difference by a large amount of gases.

Further, in the case of a light collision, for example, only the ignitor 8 is operated (ignited by the application of power thereto) so that the airbag can be expanded and inflated moderately by a small amount of gas.

Thus, in the gas generator D, since the connectors 33, 34 can be connected to the ignitors 8, 9 with discrimination of the pattern E for the ignitors 8, 9, the ill-set of the connectors 33, 34 to the ignitors 8, 9 can be prevented. In the gas generator D used particularly to expand and inflate the driver's seat airbag, the ignitors 8, 9 have to be located in the plane of the lower cover plate 15 and thus the connectors 33, 34 are susceptible to the ill-set, but the different pattern E of the ignitors 8, 9 can permit the connectors to be surely connected to their related ignitors.

An amount of gas generated can be adjusted by adequately selecting the operation of the ignitors 8, 9 (the ignition by the application of power thereto), whereby the expansion and inflation of the airbag can be controlled.

Thus, the connection of the connectors 33, 34 to the corresponding ignitors 8, 9 enables the ignitors 8, 9 and the control circuits to be connected to each other, thus producing improved reliability with which the controlled expansion and inflation of the airbag is provided.

As a result of this, the operation of the ignitions 8, 9 (the ignition by the application of power thereto) can be well controlled by the control circuits. Hence, even when an occupant is seated immediately behind the steering wheel, the airbag can be prevented from being expanded and inflated rapidly in the initial stage to give the occupant a shock and can fulfill its intended function to protect the occupant.

Another connecting configuration as shown in FIGS. 4 and 5 may be adopted as the connecting configuration (pattern) for the ignitors 8, 9 in the gas generator D of FIGS. 1 and 2.

In FIG. 4, the pattern F is formed by differentiating the ignitors 8, 9 from each other in outer diameter of the electrode pins 24, 25. In FIG. 4, for example, the relation of D0>D1 (or D0<D1) is used: where "D1" is the outer diameters of the electrode pins 24, 25 of the ignitor 8 and "D0" is the outer diameter of the electrode pins 24, 25 of the ignitor 9. The connectors 33, 34 are also differentiated from each other by varying the inner diameters d1, d0 of the terminal holes 35, 36 (d0 < d1 or d0>d1) in accordance with the outer diameters D1, D0 of the electrode pins 24, 25 of the ignitors 8, 9.

By virtue of the differentiation in outer diameter D1, D0 of the electrode pins 24, 25 between the ignitors 8 and 9 and the differentiation in inner diameter d1, d0 of the terminal holes 35, 36 between the connectors 33 and 34, when the connectors 33, 34 are connected to the ignitors, the electrode pins 24, 25 (D0) of the ignitor 9 can be prevented from being mistakenly fitted into the terminal holes 35, 36 (d1<D0) of the connector 33.

Thus, with discrimination of the pattern F for the ignitors 8, 9, the connectors 33, 34 can be connected to their associated ignitors 8, 9. The connectors 33, 34 may be formed as an integral unit to be fitted in the stepped holes 19, 20 so that parts count of the gas generator D and the like may be reduced.

In FIG. 5, the pattern G is formed by differentiating the ignitors 8, 9 from each other in distance P, P1 between the electrode pins 24, 25 (e.g. P< P1). The connectors 33, 34 are also differentiated from each other by varying the distances P, P1 between the terminal holes 35, 36 in accordance with the distances P, P1 between the ignitors 8, 9.

By virtue of the differentiation in distance P, P1 between the ignitors 8 and 9 and the differentiation in distance P, P1 between the connectors 33 and 34, when the connectors 33, 34 are connected to the ignitors, the electrode pins 24, 25 (P) of the ignitor 9 can be prevented from being mistakenly fitted into the terminal holes 35, 36 (P1>P) of the connector 33.

Thus, with discrimination of the pattern G for the ignitors 8, 9, the connectors 33, 34 can be connected to their associated ignitors 8, 9. The connectors 33, 34 may be formed as an integral unit to be fitted in the stepped holes 19, 20 so that parts count of the gas generator D and the like may be reduced.

Alternatively, another pattern H that the ignitors 8, 9 are differentiated from each other in at least either of shape and color may be used so that the connectors 33, 34 can be connected to their associated ignitors 8, 9 with discrimination of the ignitors 8, 9. The connectors 33, 34 may be formed as an integral unit to be fitted in the stepped holes 19, 20 so that parts count of the gas generator D and the like may be reduced. Further, the ignitors 8, 9 may be fitted to the housing 1 via at least one of the distinguishing patterns E-H.

Next, reference to the gas generator D shown in FIG. 6 will be given below.

The gas generator D shown in FIG. 6 is so designed that the connectors 33, 34 having fitting portions which are different in shape from each other are fitted to the housing 1 via a different fitting configuration (pattern I) to connect the connectors to the housing 1 having fitting portions which are different in shape. The gas generator D is used to expand and inflate the driver-side airbag. This gas generator comprises the same components as those of the gas generator D of FIGS. 1 and 2 (the housing 1, the gas generating agents 7, the ignitors 8, 9, etc.). In FIG. 6, the same reference characters as those in FIGS. 1-3 refer to the corresponding members.

In FIG. 6, the housing 1 has the stepped hole 19 having a fitting groove 19a formed to extend from the opening side of the housing to the interior of the inner cylinder 13 (the space S1) and the stepped hole 20 having two fitting grooves 20a, 20b formed to extend from the opening side of the housing to the interior of the short inner cylinder 18. The connector 33 has a projection 33a to be fitted in the fitting groove 19a formed around a periphery thereof, and the connector 34 has projections 34a, 34b to be fitted in the fitting grooves 20a, 20b formed around a periphery thereof. Thus, the connectors 33, 34 are differentiated from each other in shape, to form a pattern I to connect the connectors to the housing 1. With discrimination of this pattern, the connector 33 is fitted into the stepped hole 19, while the projection 33a is fitted into the fitting groove 19a, and the connector 34 is fitted into the stepped hole 20, while the projections 34a, 34b are fitted into the fitting grooves 20a, 20b. This enables the connectors to be connected to their associated ignitors 8, 9.

The connectors 33, 34 may be formed as an integral unit to be fitted in the stepped holes 19, 20 so that parts count of the gas generator D and the like may be reduced.

By virtue of the differentiation in the number of projections between the connectors 33 and 34 and the differentiation in the number of fitting grooves between the stepped holes 19 and 20, when the connectors 33, 34 are connected to the ignitors, the connector 34 (two projections 34a, 34b) can be prevented from being mistakenly fitted in the stepped hole 19 (a single fitting groove 19a). Thus, with discrimination of the pattern I for the connectors 33, 34 (the stepped holes 19, 20), the connectors 33, 34 can be fitted in their associated stepped holes 19, 20, and as such can allow the connectors 33, 34 to be connected to their associated ignitors 8, 9.

As an alternative to this pattern I, a valiant pattern I' may be used, as shown in FIG. 7. In this valiant pattern I', the housing 1 has the stepped hole 19 having a projection 19a' formed to extend from the opening side of the housing to the interior of the inner cylinder 13 (the space S1) and a projection 19b' formed to be at a 90° angle with respect to the projection 19a' and the stepped hole 20 having a projection 20a' formed to extend from the opening side of the housing to the interior of the short inner cylinder 18 and a projection 20b' formed at a 180° angle with respect to the projection 20a' to be opposite to the projection 20a'. Also, the connector 33 has fitting grooves 33a', 33b' to be engaged with the projections 19a', 19b' formed around a periphery thereof, and the connector 34 has fitting grooves 34a', 34b' to be engaged with the projections 20a', 20b' formed around a periphery thereof. Thus, the connectors 33, 34 are differentiated from each other in shape to form the pattern I' to connect the connectors to the housing 1.

Further, as an alternative to the fitting configuration (pattern) for the connectors 33, 34 in the gas generator D of FIG. 6, another fitting configuration may be used, as shown in FIG. 8.

In FIG. 8, a pattern J is formed by differentiating the connectors 33, 34 from each other in outer diameter thereof. In FIG. 8, for example, the relation of D2<D3 (or D2>D3) is used: where "D2" is the outer diameter of the connector 33 and "D3" is the outer diameter of the connector 34. The stepped holes 19, 20 of the housing 1 are also formed to have inner diameters corresponding to the outer diameters 33, 34 (d2<d3 or d2>d3). By virtue of the differentiation in outer diameter D2, D3 between the connectors 33, 34 and the differentiation in inner diameter d2, d3 between the stepped holes 19, 20, when the connectors 33, 34 are connected to the ignitors, the connector 34 (D3) can be prevented from being mistakenly fitted into the stepped hole 19 (d2<D3). Thus, with discrimination of the pattern J for the connectors 33, 34, the connectors 33, 34 are connected to their associated stepped holes 19, 20, whereby the connectors 33, 34 are connected to their associated ignitors 8, 9. The connectors 33, 34 may be formed as an integral unit to be fitted in the stepped holes 19, 20 so that parts count of the gas generator D and the like may be reduced.

Additionally, a pattern K that the connectors 33, 34 are differentiated from each other in color may be used so that the connectors 33, 34 can be connected to their associated ignitors 8, 9 with discrimination of the connectors 33, 34. Further, the connectors 33, 34 may be fitted to the housing 1 via at least one of the patterns I-K.

The pattern I, the pattern I' or the pattern J may be formed by using engaging members 119, 120 to be fitted in their associated stepped holes 19, 20. For example, for the pattern I', the engaging members 119, 120 may be provided with projections 119a and 119b, and 120a and 120b, respectively, as shown in FIG. 9. For the pattern I, the engaging members 119, 120 may be provided with fitting grooves 119a and 119b, 120a and 120b (not shown), respectively. For the pattern J, the engaging members 119, 120 may be formed to have the inner diameters d2', d3' having the relation of d2'<d3' (or d2'>d3'), as shown in FIG. 10. In general, the housing 1 is formed of metal such as iron and aluminum, so that there may be cases where it is hard to form the fitting grooves or projections in the stepped holes 19, 20. The engaging members 119, 120 may be formed separately, for example, by using a readily workable resin, so that the engaging members 119, 120 can be fitted in the stepped holes 19, 20. This can provide the advantage that the projections or the fitting grooves can be easily formed in the stepped holes 19, 20. Also, the use of the separately formed engaging members 119, 120 can provide the additional advantage of coloring them easily. Thus, for the pattern K also, a further reliable connection between the stepped holes and their associated connectors 33, 34 can be provided by coloring a set of stepped hole 19 (engaging member 119) and its associated connector 33 and another set of stepped hole 20 (engaging member 120) and its associated connector 34 by the same colors, respectively.

Thus, in the gas generator D of FIG. 6, since the connectors 33, 34 can be connected to the ignitors 8, 9 with discrimination of the patterns I-K for the connectors 33, 34, the ill-set of the connectors 33, 34 to the ignitors 8, 9 can be prevented.

Also, the controlled expansion and inflation of the airbag can be provided by adequately selecting the operation (ignition) of the ignitors 8, 9.

In the gas generator D, the connecting configurations (patterns E-H) to connect the ignitors 8, 9 to the connectors 33, 34 different from each other as shown in FIGS. 1-5 may be used in combination. This can ensure the prevention of the ill-set of the connectors 33, 34 with discrimination of the patterns E-H for the ignitors 8, 9, in addition to the patterns I-J for the connectors 33, 34.

Next, reference to the gas generator D shown in FIG. 11 will be given below.

The gas generator D of FIG. 11 is so designed that the connectors 43, 44 disposed at the outside of the housing 1 are connected to the control-circuit-side connectors 63, 64, respectively, via a connecting configuration (pattern L) to connect the connectors to the control-circuit-side connectors 63, 64 different from each other. The gas generator D is used to expand and inflate the driver-side airbag. This gas generator comprises the same components as those of the gas generator D of FIGS. 1 and 2 (the housing 1, the gas generating agents 7, the ignitors 8, 9, etc.). In FIG. 11, the same reference characters as those in FIGS. 1-3 refer to the corresponding members.

In FIG. 11, the ignitors 8, 9 are presented in the form of pigtail type squibs that make the ignition agents 27 to be ignited by the passage of electric current through electrode wires 45, 46. The electrode wires 45, 46 of the ignitors 8, 9 extend from the housing 1 to the outside thereof and are connected to their associated connectors 43, 44 at the outside of the housing 1. Each pigtail type squib comprises the bridge wire 26, the ignition agent 27, the tubular member 28, and the plug 29, as is the case with the pin-type squib shown in FIG. 1 and others.

Cup members 48 made of metal are fitted in the inner cylinders 13, 18 of the housing 1, respectively. Each cup member 48 has a fire hole 48a formed therein that opens into the inner cylinder 13 (the space S1) or the combustion chamber 4 when the ignitors 8, 9 are ignited. The ignitors 8, 9 are fitted in their associated cup members 48 from the tubular member 28 side, while the connectors 43, 44 are placed at the outside of the housing 1. Sequentially, after stopper rings 67 are fitted to the ignitors 8, 9 at the bottom thereof, the ignitors 8, 9 are fixedly caulked to the housing 1, respectively, by the caulking projections 68 projecting toward the bottom of the lower cover plate 15 being folded radially inwardly.

The connectors 43, 44 for the ignitors 8, 9 are formed of resin having an excellent electrical insulation property and the like material, and each of the connectors has two connecting pins 65, 66. The connecting pins 65, 66 are connected to the electrode wires 45, 46, respectively. A different pattern L is formed by using the relation of e.g. D4<D5 (or D4>D5): where "D4" is the outer diameter of the connecting pin 65 of the connector 43 and "D5" is the outer diameter of the connecting pin 65 of the connector 44.

Each of the control-circuit-side connectors 63, 64 comprises the same components as those (the terminal holes 35, 36, the terminals 37, 38, etc.) of the connectors 33, 34 of FIG. 3. The control-circuit-side connectors 63, 64 are differentiated from each other by varying the inner diameters d4, d5 of the terminal holes 35 (d4<d5 or d4>d5) in accordance with the outer diameters D4, D5 of the connecting pins 65 of the connectors 43, 44.

The connecting pins 65, 66 of the connectors 43, 44 are fitted into the terminal holes 35, 36 of the control-circuit-side connectors 63, 64, to connect the connecting pins 65, 66 and the terminals 37, 38 to each other.

By virtue of the differentiation in outer diameter D4, D5 between the connecting pins 65 of the connectors 33, 34 and the differentiation in inner diameter d4, d5 between the terminal holes 35 of the control-circuit-side connectors 63, 64, when the connectors 43, 44 are connected to the control-circuit-side connectors, the connecting pin 65 (D4) of the connector 44 can be prevented from being mistakenly fitted into the terminal hole 35 (d5>D4). Thus, with discrimination of the pattern L for the connectors 33, 34, the connectors 33, 34 are connected to their associated control-circuit-side connectors 63, 64.

As an alternative to the connecting configuration (pattern) for the connectors 43, 44 of the gas generator D of FIG. 11, another configuration may be used as shown in FIG. 12. In FIG. 12, a pattern M is formed by differentiating the connectors 43, 44 from each other in distance P2, P3 between the connecting pins 65, 66. The control-circuit-side connectors 63, 64 are also differentiated from each other by varying the distances P2, P3 between the terminal holes 35, 36 in accordance with the distances P2, P3 between the connectors 43, 44.

By virtue of the differentiation in distance P2, P3 between the connectors 43, 44 and the differentiation in distance P2, P3 between the control-circuit-side connectors 63, 64, when the connectors 43, 44 are connected to the control-circuit-side connectors, the connecting pins 65, 66 (P3) of the connector 44 can be prevented from being mistakenly fitted into the terminal holes 35, 36 (P3>P2) of the control-circuit-side connector 63. Thus, with discrimination of the pattern L of the connectors 33, 34, the connectors 33, 34 can be connected to their associated control-circuit-side connectors 63, 64.

Additionally, a pattern N that the connectors 33, 34 are differentiated from each other in color may be used so that the connectors 33, 34 can be connected to their associated ignitors 8, 9 with discrimination of the connectors 33, 34. Further, the connectors 33, 34 may be fitted to the housing 1 via at least one of the patterns I-K. The connectors 33, 34 may be formed as an integral unit to be fitted in the stepped holes 19, 20. In addition, the control-circuit-side connectors 63, 64 may be formed as an integral unit. This can provide the reduced parts count of the gas generator D and the like.

Thus, in the gas generator D of FIG. 11, since the connectors 43, 44 can be connected to the control-circuit-side connectors 63, 64 with discrimination of the patterns L-N for the connectors 43, 44, the ill-set of the connectors 43, 44, 63, 64 can be prevented.

Also, the controlled expansion and inflation of the airbag can be provided by adequately selecting the operation (ignition) of the ignitors 8, 9.

In the gas generator D of FIG. 11, modification may be made, for example, by providing the terminal holes 35, 36 for the connectors 43, 44 and also providing the connecting pins 65, 66 for the control-circuit-side connectors 63, 64, so that the patterns L-N can be applied to those connectors.

In the gas generator D of FIG. 11, the pin-type squibs may be used, as shown in FIG. 13. In FIG. 13, the ignitors 8, 9 are connected to gas generator-side connectors 73, 74, respectively, and the connectors 43, 44 are connected to the ends of lead wires 75 led from the connectors 73, 74 to the outside of the housing 1, respectively. The gas generator-side connectors 73, 74 each comprises the same components as those of the connectors 33, 34 of FIG. 3 (the terminal holes 35, 36, the terminals 37, 38, etc.). The gas generator-side connectors 73, 74 are fitted in the stepped holes 19, 20 of the housing 1, respectively, whereby the terminals 37, 38 of the connectors 73, 74 and the electrode pins 24, 25 of the ignitors 8, 9 are connected to each other.

In FIG. 13 as well, the connecting configuration (the pattern L-N) for the connectors 43, 44 to be differentiated from each other can be used to prevent the ill-set of the connectors 43, 44, 63, 64.

In the ignitors 8, 9 and the gas generator-side connectors 73, 74, modification may be made, for example, by providing the connecting configuration (pattern E-H) for the ignitors 8, 9 to be differentiated from each other, as shown in FIGS. 1-5 and also providing the fitting configuration (pattern I-K) for the connectors 73, 74 to be differentiated from each other, as shown in FIGS. 6-10, so that the ill-set of the connectors can be prevented. The gas generator-side connectors 73, 74 may be formed as an integral unit to be fitted in the stepped holes 19, 20. Also, the connectors 43, 44 may be formed as an integral unit. This integrally formed unit can provide the reduced parts count of the gas generator D and the like.

Next, reference to the gas generator P shown in FIG. 14 will be given below.

The gas generator P of FIG. 14 is used to expand and inflate the passenger-side airbag. The gas generator comprises a long cylindrical housing 51, a filter supporting member 2 fitted in the housing 51, a partition member 55 for partitioning an interior of the filter supporting member 2 into two left and right combustion chambers 53, 54, filters 6 fitted in the combustion chambers 53, 54, gas generating agents 7 packed in the combustion chambers, and two ignitors 8, 9 for burning the gas generating agents 7 packed in the combustion chambers 53, 54 independently of each other. In FIG. 14, since the same reference numerals as those of FIG. 1 refer to the corresponding members, the description thereon is omitted.

The housing 51 has a single cylinder structure formed by an outer cylinder 52 and two lids 56 fitted to the opposite ends of the outer cylinder 52. The housing 51 has in its interior a closed space S defined by the caulking projections 52b projecting from opposite ends of the outer cylinder 52 being folded radially inwardly.

The outer cylinder 52 of the housing 51 has a plurality of gas discharge holes 52a formed to communicate between the closed space S and outside (interior of the airbag). The gas discharge holes 52a are spaced apart at a given interval along an axial direction and a circumferential direction of the housing 51. The gas discharge holes 52a are closed by a burst plate 16 (a metal foil such as an aluminum foil) adhered to an inside surface around the outer cylinder 52.

Fitted in the closed space S in the housing 51 is the filter supporting member 2. The filter supporting member 2 is fitted in the housing 51 throughout its whole width between lids 56, and the closed space S is partitioned into the gas passage space S2 (annular space) on the outer cylinder 52 side and the inner combustion space S3.

The combustion space S3 in the filter supporting member 2 is partitioned into two left and right combustion chambers 53, 54 by the partition member 55. The partition member 55 is press-fitted in the filter supporting member 2 in substantially parallel to the lids 56, so that the combustion chamber S3 is partitioned into the combustion chambers 53, 54 in a predetermined volume proportion.

The filters 6 are fitted in the combustion chambers 53, 54, respectively, and also the gas generating agents 7 are packed therein. Each filter 6 is fitted in the filter supporting member 2 and extends throughout its whole width from the lid 56 to the partition member 55 within the combustion chamber 3, 4. The filters 6 in the combustion chambers 53, 54 are packed with gas generating agents 7 from which high temperature gas is generated by burning. The gas generating agents packed in the combustion chambers are adjusted in amount so that a controlled expansion and inflation of the airbag can be provided.

The ignitors 8, 9 are fitted to the lids 56 of the housing 51, respectively. The ignitors 8, 9 are in the form of the same pin-type squibs as those of the gas generator D of FIGS. 1 and 2. The ignitors 8, 9 are fitted to the housing 1 (the lid 56) via at least one of the connecting configurations (patterns E-H) for the ignitors to be differentiated from each other.

The ignitors 8, 9 are fitted into the fitting holes 57 of the lids 56 from the tubular member 28 side, respectively, so that the ignitors can confront the ignition agents 58 packed in the filters 6. Then, the ignitors 8, 9 are fixedly caulked to the lids 56, respectively, by the caulking projections 56a of the lids 56 being folded radially inwardly.

The gas generator P thus constructed is connected to the control circuits and is built in the airbag module fitted in the steering wheel. When the connectors 33, 34 are connected to the ignitors, the connectors 33, 34 are connected to their associated ignitors 8, 9 with discrimination of the patterns E-H for the ignitors 8, 9. This can prevent the ill-set of the connectors 33, 34.

In the gas generator P, the controlled expansion and inflation of the airbag can be provided by adequately selecting the operation of the ignitors 8, 9 (the ignition by the application of power thereto), as is the case with the gas generator D of FIGS. 1 and 2.

Thus, the connection of the connectors 33, 34 to their associated ignitors 8, 9 can allow the ignitors 8, 9 and the control circuits to be surely connected to each other, and as such can produce improved reliability with which the controlled expansion and inflation of the airbag is provided.

As a result of this, the operation of the ignitions 8, 9 (the ignition by the application of power thereto) can be well controlled by the control circuits. Thus, the controlled expansion and inflation of the airbag in accordance with the seating position of the occupants can be produced.

In the gas generator P, the fitting configurations (patterns I-K) for the connectors 33, 34 to be differentiated from each other may be used, as is the case with those of FIGS. 6-10. Further, as is the case with the gas generator D of FIG. 11, the ignitors 8, 9 of the gas generator P may be in the form of the pigtail squibs so that the connecting configurations (patterns L-N) for the connectors 43, 44 to be differentiated from each other may be used.

While the gas generators D, P illustrated above is so structured that the gas generating agents 7 packed in the two combustion chambers 3; 4, 53; 54 can be burnt by the two ignitors 8, 9 independently of each other, an alternative structure may be used wherein the space of the housing 1, 51 is partitioned into three or more combustion chambers so that the gas generating agents packed in those combustion chambers can be burnt by a plurality of ignitors independently of each other.

While the gas generators D, P illustrated is so structured that the space is partitioned into a plurality of combustion chambers 3; 4, 53, 54, an alternative structure may be used wherein the closed space S of the housing 1, 51 is formed as a single combustion chamber, without being partitioned by the partition member 5, 55, so that the gas generating agents packed in that combustion chamber can be burnt by a plurality of ignitors.

### Industrial Applicability

The gas generator of the present invention is so structured that the gas generating agents packed in the housing can be burnt by use of two or more ignitions. The ignitors are fitted to the housing via the connecting configuration (pattern) to connect the ignitors to the connectors different from each other and also an amount of gas generated is adjusted by properly selecting the operations of the ignitors, whereby a controlled expansion and inflation of the airbag can be provided.

## Claims

1. A gas generator including a cylindrical housing (1, 51), gas generating agents (7) packed in the housing (1, 51) to generate gas by burning, and a plurality of ignitors (8, 9) for burning the gas generating agents (7),
wherein the ignitors (8, 9) are fitted to the housing (1, 51) via connecting configuration (pattern E-H) to connect the ignitors (8, 9) with connectors (33, 34) different from each other.

2. A gas generator including a cylindrical housing (1, 51), a partition member (5, 55) for partitioning an interior space of the housing (1, 51) into a plurality of combustion chambers (3, 4, 53, 54), gas generating agents (7) packed in the combustion chambers (3, 4, 53, 54) to generate gas by burning, and a plurality of ignitors (8, 9) for burning the gas generating agents (7) packed in the combustion chambers (3, 4, 53, 54) independently of each other, wherein the ignitors (8, 9) are electric type ones that are ignited by passage of electric current through two electrodes (24, 25) and are fitted to the housing (1, 51) via connecting configuration (pattern E-H) to connect the ignitors (8, 9) with connectors (33, 34) different from each other.

3. The gas generator according to Claim 1 or 2, wherein the ignitors (8, 9) are fitted to the housing (1, 51) in such a relation that when virtual lines (a, b) connecting between electrodes (24, 25) are assumed in the ignitors (8, 9), respectively, those virtual lines (a, b) are intersected each other.

4. The gas generator according to Claim 1 or 2, wherein the ignitors (8, 9) are differentiated from each other in shape of electrode (24, 25), via which the ignitors (8, 9) are fitted to the housing (1, 51).

5. The gas generator according to Claim 1 or 2, wherein the ignitors (8, 9) are differentiated from each other in distance (P, P1) between electrodes (24, 25), via which the ignitors (8, 9) are fitted to the housing (1, 51).

6. The gas generator according to Claim 1 or 2, wherein the ignitors (8, 9) are differentiated from each other in at least either of shape and color, via which the ignitors (8, 9) are fitted to the housing (1, 51).

7. A gas generator including a cylindrical housing (1, 51), gas generating agents (7) packed in the housing (1, 51) to generate gas by burning, and a plurality of ignitors (8, 9), fitted to the housing (1, 51), for burning the gas generating agents (7), wherein the ignitors (8, 9) are designed to be connected to their respective connectors (33, 34), and wherein the connectors (33, 34) are fitted to the housing (1, 51) via fitting configuration (pattern I-K) to fit the connectors (33, 34) different from each other to the housing (1, 5).

8. The gas generator according to Claim 7, wherein the ignitors (8, 9) are fitted to the housing (1, 51) via connecting configuration (pattern E-H) to connect the ignitors (8, 9) with the connectors (33, 34) different from each other.

9. The gas generator according to Claim 7, wherein the connectors (33, 34) are differentiated from each other in at least either of shape and color, via which the connectors (33, 34) are fitted to the housing (1, 51).

10. The gas generator according to Claim 7, wherein the connectors (33, 34) are formed as an integral unit.

11. A gas generator including a cylindrical housing (1, 51), gas generating agents (7) packed in the housing (1, 51) to generate gas by burning, and a plurality of ignitors (8, 9), fitted to the housing (1, 51), for burning the gas generating agents (7), wherein the ignitors (8, 9) are designed to be connected to their respective connectors (43, 44) located outside of the housing (1, 51), and wherein the connectors (43, 44) are connected with control-circuit-side connectors (63, 64) via connecting configuration (pattern L-N) to connect the connectors (43, 44) with the control-circuit-side connectors (63, 64) different from each other.

12. The gas generator according to Claim 11, wherein at least one of the connectors (43, 44) and the control-circuit-side connectors (63, 64) are formed as an integral unit.
